# EUROPÄISCHE PATENTANMELDUNG

(11) **EP 0 580 099 A2**
(43) Veröffentlichungstag der Anmeldung: **26.01.1994**
(21) Anmeldenummer: 93111530.7
(22) Anmeldetag: 17.07.1993
(51) Int. Cl.: G01F 1/66, G01F 15/00

(54) **Ultraschall-Gaszähler**

(30) Priorität: 23.07.1992 DE 4224372
(71) Anmelder: G. Kromschröder AG, D-49080 Osnabrück (DE)
(72) Erfinder: Taphorn, Werner, Dipl.-Phys., D-49692 Sevelten (DE); Zips, Alf, Dipl.-Ing., d-49078 Osnabrück (DE); Bünnemeyer, Manfred, Dipl.-Ing., D-49393 Lohne (DE); Middelberg, Veit, Dipl.-Ing., D-49170 Hagen a.T.W. (DE); Kammerahl, Andreas, Dipl.-Ing., D-49448 Lemförde (DE)
(74) Vertreter: Zenz, Joachim Klaus, Dipl.-Ing.

(57) **Zusammenfassung**

Der Zähler weist ein Gehäuse (1) mit einem Einlaß und einem Auslaß auf. Zwischen dem Einlaß und dem Auslaß ist das Gehäuse durch eine Trennwand unterteilt, die von einem Meßrohr (5) mit rechteckigem Querschnitt durchdrungen wird. Das Meßrohr wird von dem Gas durchströmt und gleichzeitig von stirnseitigen Wandlern (9) mit Ultraschallpulsen beaufschlagt. Aus der Laufzeitdifferenz der bidirektionalen Schallpulse bestimmt sich der Volumenstrom des Gases. Die Zuführung des Gases zum Meßrohr erfolgt über zwei Führungskanäle (10, 11) die beidseitig entlang des Meßrohres verlaufen, und zwar entlang von dessen Längsseiten. Sie besitzen ebenfalls rechteckige Querschnitte und enthalten je einen Strömungsgleichrichter.

## Beschreibung

Die Erfindung betrifft einen Ultraschall-Gaszähler mit einem Gehäuse, das einen Einlaß und einen Auslaß aufweist, einer zwischen dem Einlaß und dem Auslaß angeordneten, das Gehäuse unterteilenden Trennwand, einem durch die Trennwand hindurchgeführten Meßrohr, das stirnseitige Einlaß- bzw. Auslaßöffnungen aufweist, vor und hinter dem Meßrohr angeordneten Einlaß- bzw. auslaßseitigen Ultraschall-Wandlern und mit mindestens einem entlang des Meßrohres verlaufenden Führungskanal, der eintrittsseitig mit dem Einlaß des Gehäuses und austrittsseitig mit der Einlaßöffnung des Meßrohres in Verbindung steht.

Die beiden Wandler arbeiten je als Sender und Empfänger. Mit Hilfe von Messungen der Laufzeit der bidirektionalen Schallpulse wird der Volumenstrom des Gases bestimmt.

Bei einem bekannten Zähler der eingangs genannten Art (EP 0479434 A1) ist das Meßrohr im Querschnitt kreisförmig ausgebildet und zentral innerhalb des Führungskanals angeordnet. Die stirnseitigen Wandler sitzten in Kammern, die allseitig geschlossen sind und in der dem Meßrohr benachbarten Wand lediglich eine durch ein Gitter abgeschirmte Öffnung aufweisen. Durch diese Konstruktion wird eine Einkopplung von im wesentlichen ebenen Wellen in das Meßrohr angestrebt.

Allerdings müssen, bedingt durch die Kammern, erhebliche Verluste an Schallenergie in Kauf genommen werden. Dies führt zu einer Verminderung der Meßpräzision. Außerdem ist die bekannte Konstruktion aufwendig. Insbesondere müssen die Kammern mit schallschluckendem Material verkleidet werden. Ferner verbietet sich eine raumsparende Gestaltung.

Der Erfindung liegt die Aufgabe zugrunde, einen Gaszähler der eingangs genannten Art zu schaffen, der bei einfacher und platzsparender Konstruktion mit erhöhter Meßgenauigkeit arbeitet.

Zur Lösung dieser Aufgabe ist der Ultraschall-Gaszähler nach der Erfindung dadurch gekennzeichnet, daß das Meßrohr einen rechteckigen Querschnitt aufweist und daß zwei Führungskanäle vorgesehen sind, von denen jeder entlang einer der Längsseiten des Meßrohres verläuft.

Die in den Zähler eintretende Gasströmung wird also auf die beiden Führungskanäle aufgeteilt und sodann beidseitig symmetrisch in das Meßrohr eingeleitet. Dessen rechteckiger Querschnitt führt dazu, daß bei der gewählten Schallfrequenz im wesentlichen nur ebene Wellen durchgelassen werden. Die insbesondere bei hohen Strömungsgeschwindigkeiten auftretenden Modulationen werden unterdrückt. Dies minimiert resultierende Signalverzerrungen, die sonst bei der elektronischen Signalauswertung nicht kompensierbar sind. Ferner führt der rechteckige Kanalquerschnitt durch Begrenzung makroskopischer Wirbel zu einer Gleichrichtung der Strömung. Dadurch vermindert sich die Anfälligkeit der Strömung gegen unsymmetrische Strömungsprofile, verursacht durch die Installation der Gaszähler. Es wurde gefunden, daß eine Querschnittsbreite von etwa 5mm ganz hervorragende Meßergebnisse liefert. Die Querschnittshöhe, d.h. die Erstreckung der Längsseiten des Meßrohrquerschnitts hängt ab vom Durchmesser der Wandler. Die erfindungsgemäße Konstruktion ist einfach und von geringer Baugröße. Der Gaszähler eignet sich insbesondere als Haushaltsgerät mit einem Meßbereich von 1:150.

Unter rechteckigem Querschnitt des Meßrohres wird ein Querschnitt verstanden, dessen parallele Längsseiten eben ausgebildet sind, während die Querseiten durchaus eine Krümmung aufweisen können. Auch ist der rechteckige Querschnitt vor allen Dingen im Einlaßbereich des Meßrohres von wesentlicher Bedeutung. Im Auslaßbereich kann sich die Querschnittsform ändern, beispielsweise durch Übergang auf einen ovalen oder kreisförmigen Querschnitt.

Nach einem besonders vorteilhaften Merkmal weist jeder Führungskanal einen rechteckigen Querschnitt auf, wobei eine seiner Längsseiten zumindest im austrittsseitigen Bereich auf der zugehörigen Längsseite des Meßrohres liegt. Durch die rechteckige Ausbildung der Querschnitte auch der Führungskanäle wird der Effekt der Strömungsgleichrichtung gesteigert. Hierzu wird ferner vorgeschlagen, daß die Führungskanäle Gleichrichter enthalten, die zumindest im austrittsseitigen Bereich parallel zum Meßrohr verlaufen. Die Gleichrichter bewirken eine zusätzliche Verminderung von Querströmungen und Turbulenzen.

In wesentlicher Weiterbildung der Erfindung ist der Gaszähler gekennzeichnet durch Strömungsumlenkeinrichtungen im Bereich der Einlaß- bzw. Auslaßöffnungen des Meßrohres. Diese Einrichtungen minimieren die Druckverluste und verhindern das Auftreten von Abrißkanten.

Insbesondere ist es von Vorteil, daß im Bereich der Einlaßöffnung des Meßrohres die von letzterem entfernt liegenden Längsseiten der Führungskanäle durch eine bogenförmige, den zugehörigen Wandler enthaltende Wand miteinander verbunden sind. Letztere fördert die sanfte, symmetrische Umlenkung der beiden seitlichen Strömungen, wobei sich die Gleichrichter der Führungskanäle vorzugsweise über das einlaßseitige Ende des Meßrohres hinaus erstrecken.

Ferner ist es vorteilhaft, daß sich das auslaßseitige Ende des Meßrohres in eine Kammer hinein erstreckt, deren den zugehörigen Wandler enthaltende Stirnwand konkav gekrümmt ist. Die aus dem Meßrohr austretende Strömung kann also das Meßrohr allseitig umströmen, wodurch sich ein weitgehend verlustfreier Druckrückgewinn ergibt. Bei einem maximalen Volumenstrom von 6m³/h kann der gesamte Druckverlust deutlich unter 2 mbar gehalten werden.

In Weiterbildung der Erfindung wird vorgeschlagen, daß der Querschnitt des Meßrohres an dessen auslaßseitigem Ende vorzugsweise in Querrichtung stetig zunimmt. Bereits vor der Auslaßöffnung kommt es also zu einer Geschwindigkeitsverminderung und damit zu einer Minimierung der insbesondere bei hohen Geschwindigkeiten auftretenden Schallverwehungen.

Als weitere strömungsgünstige Maßnahme wird vorgeschlagen, daß die Einlaß- bzw. Auslaßöffnungen des Meßrohres gerundete Kanten bilden und damit die Entstehung von Abrißwirbeln verbinden.

Ein grundsätzliche Bestreben ist es, im Meßrohr mit maximalen Geschwindigkeiten zu arbeiten, da dies zu einer hohen zeitlichen Auflösung der Strömung führt. Die Obergrenze ergibt sich aus dem zulässigen Druckverlust. Unter diesen Gesichtspunkten ist vorzugsweise der Strömungsquerschnitt am Übergang zwischen den Führungskanälen und der Einlaßöffnung des Meßrohres vermindert. Die hier bewirkte Beschleunigung der Strömung sorgt außerdem dafür, daß sich im Bereich des zugeordneten Wandlers keine Staubteilchen absetzen können.

Vorteilhafterweise ist den Führungskanälen ein Strömungsteiler vorgelagert, der eine gleichmäßige Beschickung der beiden Führungskanäle bewirkt. Er arbeitet in einem Bereich geringer Strömungsgeschwindigkeit und trägt daher nicht wesentlich zur Erhöhung der Druckverluste bei.

In Weiterbildung der Erfindung ist der Gaszähler gekennzeichnet durch einen vom Einlaß des Gehäuses zu den Führungskanälen führenden Eintrittskanal vergrößerten Querschnitts. Dieser Eintrittskanal trägt zur Beruhigung der Strömung und damit zur Unabhängigkeit des Zählers von den Installationsbedingungen bei. Darüberhinaus kann der Eintrittskanal in vorteilhafter Weise zur Aufnahme eines Sicherheitsabsperrventiles sowie zur Staubabscheidung insbesondere an entsprechenden Wandaufrauhungen dienen.

Eine konstruktive Optimierung ergibt sich dadurch, daß eine Seite des Eintrittskanals von den Querseiten des Meßrohres und der Führungskanäle begrenzt wird. Das Profil des Eintrittskanals liegt also über dem insgesamt viereckigen, von den Führungskanälen und dem mittigen Meßrohr gebildeten Profil. Für den Übertritt der Strömung aus dem Eintrittskanal in die Führungskanäle sind Öffnungen in den entsprechenden Querseiten ausgespart, und zwar vorzugsweise direkt vor der das Gehäuse unterteilenden Trennwand. In der Mitte zwischen diesen Öffnungen sitzt der Strömungsteiler, und zwar mittig auf der Oberseite des Meßrohres.

Der Eintrittskanal ist vorzugsweise länger als die auslaßseitig dem Meßrohr zugeordnete Kammer. Auf diese Weise trägt der Eintrittskanal den empfindlichen Strömungsbedingungen im Einlaßbereich Rechnung, während die auslaßseitige Kammer lediglich dem möglichst verlustfreien Druckrückgewinn genügen muß. Insgesamt ergibt sich eine sehr geringe Baugröße.

In wesentlicher Weiterbildung der Erfindung wird der Abstand zwischen den Einlaß- bzw. Auslaßöffnungen des Meßrohres und den zugehörigen Wandlern von der Nahfeldlänge der akustischen Felder bestimmt. Die im Nahfeld auftretenden seitlichen Strahlungskeulen können also nicht in das Meßrohr eintreten. Dementsprechend herrschen in letzterem definierte Schallfelder, was zur Verminderung der Intensitätsverluste im Meßrohr beiträgt.

Ein wesentliches Problem, das nicht nur bei dem erfindungsgemäßen rechteckigen Querschnitt des Meßrohres, sondern auch bei Meßrohren mit anderen Querschnittsformen auftritt, liegt in den insbesondere bei hohen Strömungsgeschwindigkeiten zu beobachtenden Strahlverwehungen. Diese führt an der Einlaßöffnung des Meßrohres dazu, daß die Richtung der Wellenausbreitung eine radial nach innen gerichtete Geschwindigkeitskomponente erhält, die keinen Beitrag zur Laufzeitdifferenz liefert. Um diesem Effekt entgegenzuwirken, ist es vorteilhaft, daß der einlaßseitige Wandler eine konvex gekrümmte Schallfläche aufweist. An der Austrittsöffnung des Meßrohres liegen die Verhältnisse umgekehrt. Hier bewirkt die Strahlverwehung eine radial nach außen gerichtete Geschwindigkeitskomponente des Wellenvektors, die ebenfalls keinen Beitrag zur Laufzeitdifferenz der Schallpulse liefert. Hier ist es vorteilhaft, daß der auslaßseitige Wandler eine konkav gekrümmte Schallfläche aufweist. Im übrigen kann es von Vorteil sein, die Wandler exzentrisch zum Meßrohr und ggf. gegeneinander versetzt anzuordnen.

In wesentlicher Weiterbildung der Erfindung ist die Innenwand des Meßrohres mindestens teilweise mit einer Oberflächenstruktierung versehen, die auch als Reflexionsflächen ausgebildet sein kann. Strömungstechnisch bewirkt diese Oberflächenstrukturierung, daß bei kleinen Geschwindigkeiten sich kein laminares Strömungsprofil ausbildet und der Turbulenzgrad der Strömung erhöht wird. Dies minimiert die Abhängigkeit der Meßgenauigkeit von der Reynolds-Zahl und damit vom Strömungsprofil. Akustisch ergibt sich eine Verminderung der Dämpfung im Meßrohr, wodurch sich die Schallintensität, verglichen mit einer glatten Rohrwand erhöht. Vorteilhafterweise werden die Oberflächenstrukturen so ausgeführt, daß sie aufgrund von Interferenzen Schallwellen höherer Moden auslöschen oder zumindest stark schwächen. Die Strukturierung kann sich auf Abschnitte der Rohrinnenfläche beschränken oder die gesamte Fläche besetzen.

In Weiterbildung der Erfindung wird vorgeschlagen, daß das Meßrohr Einbauten zur Strömungsführung und Schallstrahlumlenkung aufweist, die makroskopische Wirbel vermindern, ohne den Schallstrahl zu behindern. Darüberhinaus können mit den Einbauten Schallwellen höherer Modi abgelenkt werden, so daß diese nicht zugleich mit dem direkten Empfangspuls auf die Wandler treffen.

Auch für die Vorteile der Oberflächenstruktierung gilt, daß sie unabhängig von der Querschnittsform des Meßrohres sind. Die Bedeutung dieses Aspektes der Erfindung geht also ebenfalls über den Rahmen des rechteckigen Meßrohres hinaus.

Die Form der Oberflächenstrukturierung wird in Abhängigkeit von den Randbedingungen des Schallfeldes und der Kanalgeometrie gewählt. Sie kann regelmäßig oder unregelmäßig sein, wobei auch die Form eines gewindeähnlichen Musters in Betracht kommt.

Ferner wurde gefunden, daß die Höhe der Oberflächenstrukturierung vorzugsweise im Bereich einiger Wellenlängen der Schallwelle liegt. Wichtig ist die Reflexionsfähigkeit der Flächen.

Insgesamt minimiert die Erfindung die für die Meßgenauigkeit nachteiligen Einflüsse der Schallmitführung und der Erweiterung der Schallkeule, ferner die Auswirkungen unterschiedlicher Strömungsprofile und Einlaufströmungsbedingungen.

Als erfindungswesentlich offenbart gelten auch solche Kombinationen der erfindungsgemäßen Merkmale, die von den vorstehend diskutierten Verknüpfungen abweichen.

Die Erfindung wird im folgenden anhand bevorzugter Ausführungsbeispiele im Zusammenhang mit der beiliegenden Zeichnung näher erläutert. Die Zeichnung zeigt in:
- Fig. 1: einen Vertikalschnitt durch einen schematisch dargestellten Gaszähler nach einer ersten Ausführungsform der Erfindung;
- Fig. 2: einen Schnitt entlang der Linie II-II in Figur 1;
- Fig. 3: einen Schnitt entlang der Linie III-III in Figur 1;
- Fig. 4: einen Schnitt entlang der Linie IV-IV in Figur 1;
- Fig. 5: in schematischer Teildarstellung einen Schnitt durch eine abgewandelte Ausführungsform.

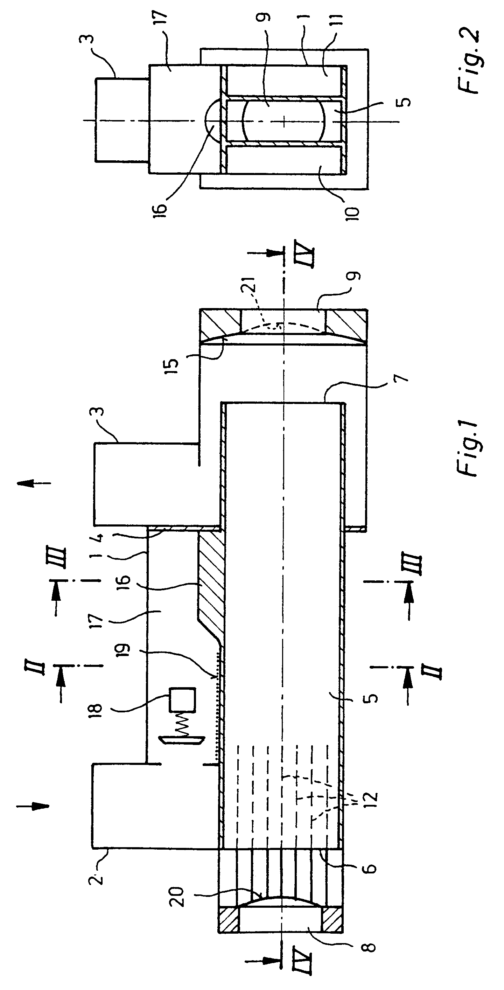

Der Ultraschall-Gaszähler nach Figur 1 weist ein Gehäuse 1 mit einem Einlaß 2 und einem Auslaß 3 auf. Zwischen dem Einlaß 2 und dem Auslaß 3 wird das Gehäuse 1 von einer Trennwand 4 unterteilt. Durch die Trennwand führt ein Meßrohr 5 hindurch. Es bildet eine Einlaßöffnung 6 und eine Auslaßöffnung 7. Der Einlaßöffnung 6 ist stirnseitig ein Ultraschall-Wandler 8 zugeordnet, während ein Ultraschall-Wandler 9 der Auslaßlöffnung 7 stirnseitig gegenüberliegt. Im vorliegenden Falle sind die Wandler zentrisch auf das Meßrohr ausgerichtet. Möglich ist jedoch auch eine exzentrische Anordnung. Ferner können die Wandler geringfügig zueinander verschoben sein, wodurch sich in vorteilhafter Weise der Effekt der Verwehung reduzieren läßt. Die Wandler 8 und 9 arbeiten jeweils als Sender und Empfänger. Aus der Laufzeitdifferenz zwischen den in Strömungsrichtung und den gegen die Strömungsrichtung wandernden Schallwellen wird der Volumenstrom des Gases ermittelt.

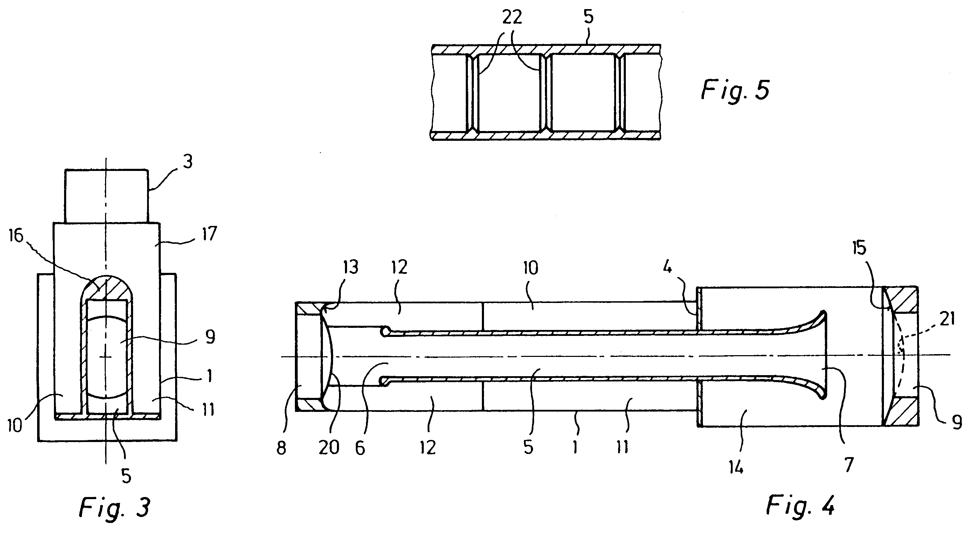

Wie aus den Figuren 2 und 3 zu ersehen, besitzt das Meßrohr 5 einen rechteckigen Querschnitt. Es läßt im wesentlichen nur ebene Welle durch und weist eine Tiefpaßcharakteristik auf. Zugleich begrenzt es die Ausbildung makroskopischer Wirbel und wirkt daher als Strömungsgleichrichter. Seine Breite beträgt 5mm.

Seitlich des Meßrohres 5 verlaufen Führungskanäle 10 und 11, die eine Verbindung zwischen dem Einlaß 2 des Gehäuses und der Einlaßöffnung 6 des Meßrohres 5 herstellen. Die Führungskanäle 10 und 11 besitzen ebenfalls rechteckige Querschnitte, die eine Strömungsgleichrichtung bewirken. Letztere wird verstärkt durch Gleichrichter 12, die sich, wie aus den Figuren 1 und 4 ersichtlich, über das einlaßseitige Ende des Meßrohres 5 hinaus erstrecken.

Die aus den Führungskanälen 10 und 11 austretende Strömung wird durch eine bogenförmige Wand 13 umgelenkt und in das Meßrohr 5 hineingerichtet. Die strömungsgünstige Gestaltung der Umlenkung wird dadurch unterstützt, daß die Einlaßöffnung 6 gerundete Kanten aufweist. Die Umlenkung erfolgt weitgehend wirbelfrei und ohne Druckverlust.

Vergleichbare Verhältnisse liegen an der Austrittsöffnung 7 des Meßrohres 5 vor. Im übrigen ist hier der Rohrquerschnitt in Querrichtung erweitert, um die Strömung zu verzögern und die Schallverwehungen zu minimieren. Eine Erweiterung in Profil-Längsrichtung ist gleichermäßen möglich, ebenso ein Übergang auf ein ovales oder kreisförmiges Profil. Das Meßrohr 5 mündet auslaßseitig in einer umgebenden Kammer 14, in der die Druckrückgewinnung erfolgt. Die Umlenkung der Strömung wird unterstützt durch eine konkav gekrümmte Stirnwand 15 der Kammer 14.

Zur Aufteilung der in den Zähler eintretenden Gasströmung auf die beiden Führungskanäle 10 und 11 dient ein Strömungsteiler 16, der diesen Kanälen vorgelagert ist. Er sitzt auf der Oberseite des Meßrohres 5 zwischen den beiden Führungskanälen 10 und 11 zugeordneten Öffnungen, deren Lage aus einem Vergleich der Figuren 2 und 3 deutlich wird. Der Strömungsteiler 16 ragt in einen Eintrittskanal 17 von vergrößertem Querschnitt hinein und liegt also im Bereich geringer Strömungsgeschwindigkeit. Der Eintrittskanal 17 enthält ein dem Einlaß 2 zugeordnetes Sicherheitsabsperrventil 18 und weist außerdem eine Wandaufrauhung 19 auf, die der Staubablagerung dient.

Durch die Anordnung des mittigen Meßrohres 5 mit den beiden seitlichen Führungskanälen 10 und 11 unterhalb des Eintrittskanals 17 ergibt sich eine sehr günstige konstruktive Gestaltung. Dies gilt auch im Hinblick darauf, daß die Kammer 14 kürzer ausgebildet ist als der Eintrittskanal 17.

Der Abstand zwischen dem Wandler und der Einlaßöffnung des Meßrohres wird, ebenso wie der Abstand zwischen dem Wandler 9 und der Auslaßöffnung 7, durch die Nahfeldlänge der akustischen Wandler bestimmt. Dementsprechend können die seitlichen Schallkeulen nicht in das Meßrohr eintreten.

Der Wandler 8 weist eine konvex gekrümmte Schallfläche 20 auf. Dadurch wird die Strahlverwehung an der Einlaßöffnung 6 kompensiert. Um auch die Strahlverwehung an der Auslaßöffnung 7 zu kompensieren, weist der Wandler 9 eine konkav gekrümmte Schallfläche 21 auf.

Bei der Ausführungsform nach Figur 5 ist das Meßrohr 5 mit einer Oberflächenstrukturierung 22 versehen, deren Höhe im Bereich einiger Wellenlängen der akustischen Felder liegt. Auf diese Weise wird bei niedriger Strömungsgeschwindigkeit der Turbulenzgrad der Strömung erhöht. Außerdem wird die Dämpfung im Meßrohr 5, d.h., die Schallschwächung aufgrund von Interferenzen und der Überlagerung von nicht-ebenen Schallwellen vermindert, was zu einer Erhöhung der Schallintensität führt. Nach Figur 5 ist die Oberflächenstrukturierung 22 regelmäßig ausgebildet. Unregelmäßige Strukturen sind gleichermaßen möglich.

Im Rahmen der Erfindung sind ohne weiteres Abwandlungsmöglichkeiten gegeben. So können die Führungskanäle 10 und 11 derart gestaltet werden, daß sie lediglich im Bereich der Einlaßöffnung 6 des Meßrohres 5 parallel zu letzterem verlaufen. Ferner können die, wie dargestellt, aus einfachen Platten bestehenden Gleichrichter 12 durch andersartige Gleichrichtereinbauten ersetzt werden. Auch können die Strömungsumlenkungen anders gestaltet werden, solange die strömungstechnischen Vorteile erhalten bleiben. Ferner besteht die Möglichkeit, die Querschnitte der Führungskanäle von der Rechteckform abweichen zu lassen, obwohl letztere besonders vorteilhaft ist. Die Oberflächenstrukturierung 22, die in Fig. 5 aus konzentrischen, im Querschnitt dreieckigen Profilen besteht, kann auch als Muster von Oberflächenerhebungen mit eckigem oder gerundetem Querschnitt in regelmäßiger, z.B. schraubenförmiger Anordnung ausgebildet sein. Wichtiger als der jeweilige Zwischenabstand ist dabei die Höhe der Strukturierung oder Aufrauhung, bezogen auf die Innenfläche des Kanals.

## Patentansprüche

1. Ultraschall-Gaszähler mit
einem Gehäuse (1), das einen Einlaß (2) und einen Auslaß (3) aufweist,
einer zwischen dem Einlaß (2) und dem Auslaß (3) angeordneten, das Gehäuse (1) unterteilenden Trennwand (4),
einem durch die Trennwand hindurchgeführten Meßrohr (5), das stirnseitige Einlaß- bzw. Auslaßöffnungen (6, 7) aufweist,
vor und hinter dem Meßrohr (5) angeordneten einlaß- bzw. auslaßseitigen Ultraschall-Wandlern (8, 9)
und mit mindestens einem entlang des Meßrohres (5) verlaufenden Führungskanal, der eintrittsseitig mit dem Einlaß (2) des Gehäuses (1) und austrittsseitig mit der Einlaßöffnung (6) des Meßrohres (5) in Verbindung steht,
**dadurch gekennzeichnet,**
daß das Meßrohr (5) einen rechteckigen Querschnitt aufweist
und daß zwei Führungskanäle (10, 11) vorgesehen sind, von denen jeder entlang einer der Längsseiten des Meßrohres (5) verläuft.

2. Ultraschall-Gaszähler nach Anspruch 1, dadurch gekennzeichnet, daß jeder Führungskanal (10, 11) einen rechteckigen Querschnitt aufweist, wobei eine seiner Längsseiten zumindest im austrittsseitigen Bereich auf der zugehörigen Längsseite des Meßrohres (5) liegt.

3. Ultraschall-Gaszähler nach Anspruch 1 oder 2, dadurch gekennzeichnet, daß die Führungskanäle (10, 11) Gleichrichter (12) enthalten, die zumindest im austrittsseitigen Bereich parallel zum Meßrohr (5) verlaufen, wobei vorzugsweise Strömungsumlenkeinrichtungen im Bereich der Einlaß- bzw. Auslaßöffnungen (6, 7) des Meßrohres (5) vorgesehen sind.

4. Ultraschall-Gaszähler nach Anspruch 3, dadurch gekennzeichnet, daß im Bereich der Einlaßöffnung (6) des Meßrohres (5) die von letzterem entfernt liegenden Längsseiten der Führungskanäle (10, 11) durch eine bogenförmige, den zugehörigen Wandler (8) enthaltende Wand (13) miteinander verbunden sind, wobei sich die Gleichrichter (12) der Führungskanäle (10, 11) vorzugsweise über das einlaßseitige Ende des Meßrohres (5) hinaus erstrecken.

5. Ultraschall-Gaszähler nach Anspruch 3 oder 4, dadurch gekennzeichnet, daß sich das auslaßseitige Ende des Meßrohres (5) in eine Kammer (14) hinein erstreckt, deren den zugehörigen Wandler (9) enthaltende Stirnwand (15) konkav gekrümmt ist.

6. Ultraschall-Gaszähler nach einem der Ansprüche 3 bis 5, dadurch gekennzeichnet, daß der Querschnitt des Meßrohres (5) an dessen auslaßseitigem Ende vorzugsweise in Querrichtung stetig zunimmt, wobei vorzugsweise die Einlaß- bzw. Auslaßöffnungen (6, 7) des Meßrohres (5) gerundete Kanten bilden und wobei ferner vorzugsweise der Strömungsquerschnitt am Übergang zwischen den Führungskanälen (10, 11) und der Einlaßöffnung (6) des Meßrohres vermindert ist.

7. Ultraschall-Gaszähler nach einem der Ansprüche 1 bis 6, dadurch gekennzeichnet, daß den Führungskanälen (10, 11) ein Strömungsteiler (16) vorgelagert ist.

8. Ultraschall-Gaszähler nach einem der Ansprüche 1 bis 7, gekennzeichnet durch einen vom Einlaß (2) des Gehäuses (1) zu den Führungskanälen (10, 11) führenden Eintrittskanal (17) vergrößerten Querschnitts, die vorzugsweise ein dem Einlaß (2) des Gehäuses (1) zugeordnetes Sicherheitsabsperrventil (18) enthält.

9. Ultraschall-Gaszähler nach Anspruch 8, dadurch gekennzeichnet, daß eine Seite des Eintrittskanals (17) von den Querseiten des Meßrohres (5) und der Führungskanäle (10, 11) begrenzt wird.

10. Ultraschall-Gaszähler nach einem der Ansprüche 1 bis 9, dadurch gekennzeichnet, daß der Abstand zwischen den Einlaß- bzw. Auslaßöffnungen (6, 7) des Meßrohres (5) und den zugehörigen Wandlern (8, 9) von der Nahfeldlänge der akustischen Felder bestimmt wird, wobei vorzugsweise der einlaßseitige Wandler (8) eine konvex gekrümmte Schallfläche (20) aufweist und wobei ferner vorzugsweise der auslaßseitige Wandler (9) eine konkav gekrümmte Schallfläche (21) aufweist.

11. Ultraschall-Gaszähler nach einem der Ansprüche 1 bis 10, dadurch gekennzeichnet, daß das Meßrohr Einbauten zur Strömungsführung und Schallstrahllenkung aufweist.

12. Ultraschall-Gaszähler nach einem der Ansprüche 1 bis 11, dadurch gekennzeichnet, daß die Innenwand des Meßrohres (5) und/oder die Einbauten mindestens teilweise mit einer Oberflächenstrukturierung (22) versehen.

13. Ultraschall-Gaszähler nach Anspruch 12, dadurch gekennzeichnet, daß die Höhe der Oberflächenstrukturierung (22) so gewählt ist, daß Wandreflexionen durch Interferenz ausgeslöchst werden, wobei die Höhe vorzugsweise im Bereich einiger Wellenlängen der Schallwelle liegt.
